# EUROPEAN PATENT APPLICATION

(11) **EP 4 671 025 A1**
(43) Date of publication of application: **31.12.2025**
(21) Application number: 25181960.3
(22) Date of filing: 11.06.2025
(51) Int. Cl.: B60K 17/16, B60K 17/04, F16H 48/22

(54) **VEHICLE DRIVE DEVICE**

(30) Priority: 24.06.2024 JP 2024101521
(71) Applicant: AISIN CORPORATION, Kariya, Aichi 448-8650 (JP)
(72) Inventor: AOKI, Hidetoshi, Kariya, 448-8650 (JP)
(74) Representative: Kramer Barske Schmidtchen Patentanwälte PartG mbB

(57) **Abstract**

Provided is a vehicle drive device (100) including braking devices that can provide diverse functions. The vehicle drive device (100) including a rotating electric machine (1), a differential gear mechanism (45) being connected to left and right wheels (W) and transmitting driving force from the rotating electric machine (1) to the wheels (W), a first braking device (51) being placed between the differential gear mechanism (45) and the left wheel (W) on a power transmission path and generating braking force against rotation of the left wheel (W), a second braking device (52) being placed between the differential gear mechanism (45) and the right wheel (W) on a power transmission path and generating braking force against rotation of the right wheel (W), and a case (2) supporting the rotating electric machine (1), the differential gear mechanism (45), the first braking device (51), and the second braking device (52) is disclosed.

## Description

### TECHNICAL FIELD

This disclosure generally relates to a vehicle drive device.

### BACKGROUND DISCUSSION

A known technique for, by placing a braking device including an electromagnetic clutch and the like coaxially with a rotating electric machine provided on a shaft separate from a differential gear mechanism, actuating the braking device when the rotating electric machine is stopped and maintaining a stopping state of a vehicle is disclosed in, for example, JP2003-72402A.

However, a conventional technique as described above has an issue that a braking device provided coaxially with a rotating electric machine is actuated only when the rotating electric machine is stopped, resulting in limited functions of the braking device.

A need thus exists for a vehicle drive device including a braking device that can provide diverse functions.

### SUMMARY

According to an aspect, a vehicle drive device including:
a rotating electric machine;
a differential gear mechanism being connected to left and right wheels and transmitting driving force from the rotating electric machine to the wheels;
a first braking device being placed between the differential gear mechanism and the left wheel on a power transmission path and generating braking force against rotation of the left wheel;
a second braking device being placed between the differential gear mechanism and the right wheel on a power transmission path and generating braking force against rotation of the right wheel; and
a case supporting the rotating electric machine, the differential gear mechanism, and the braking devices
is provided.

According to an aspect of this disclosure, a vehicle drive device including a braking device that can provide diverse functions can be provided.

### BRIEF DESCRIPTION OF THE DRAWINGS

The foregoing and additional features and characteristics of this disclosure will become more apparent from the following detailed description considered with the reference to the accompanying drawings, wherein:
Fig. 1 is a schematic top view illustrating an equipment state of a vehicle drive device in a vehicle;
Fig. 2 is a skeleton diagram illustrating a vehicle drive device according to this example;
Fig. 3 is a schematic diagram illustrating an example of an oil supply system applicable to this example;
Fig. 4 is a skeleton diagram illustrating a vehicle drive device according to another example; and
Fig. 5 is a schematic cross-sectional view of the vehicle drive device according to the another example.

### DETAILED DESCRIPTION

Examples are described in detail below with reference to the accompanying drawings. Note that scales used in the drawings are strictly examples and do not limit the drawings; and the shapes in the drawings may be partially exaggerated for convenience of description. Further, only part of a plurality of parts with the same attributes may be given reference signs in the drawings for better recognizability.

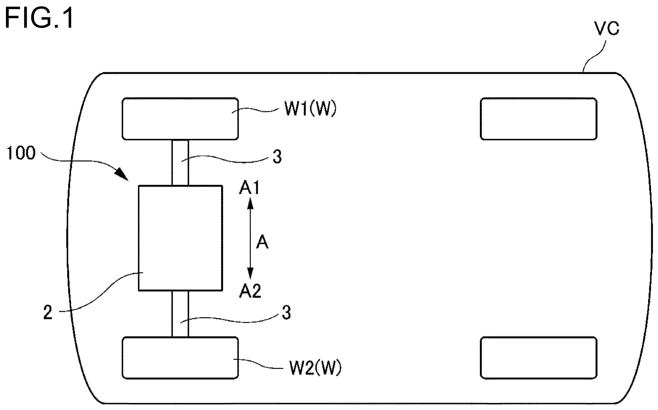

In the following description, a direction related to each member represents a direction in a state of the member being installed in a vehicle drive device 100. Further, terms related to a dimension, a placement direction, a placed position, and the like for each member are concepts including a state including a difference based on an error (an allowable level of error in manufacturing). An A-direction (see Fig. 1 and the like) is associated with a width direction of a vehicle and an axial direction, and an A1 side and an A2 side along the A-direction are defined in Fig. 1 and the like.

"Drive-coupled" herein refers to a state of two rotating elements being coupled in such a way as to allow transmission of driving force (synonymous with torque), which includes a state of the two rotating elements being coupled in such a way as to rotate integrally or a state of the two rotating elements being coupled in such a way as to allow transmission of driving force through one or more than two transmission members. Such transmission members include various members transmitting rotation at the same speed or at a changed speed (e.g., a shaft, a gear mechanism, a belt, and a chain). Note that the transmission members may include engagement devices selectively transmitting rotation and driving force (e.g., a frictional engagement device and a mesh engagement device).

"A power transmission path" herein refers to a transmission path of power from a power source (a rotating electric machine 1 in this example) to wheels, and the power transmission path is formed by a plurality of elements being drive-coupled from the power source to the wheels.

"A rotating electric machine" is herein used as a concept including all of a motor, a generator, and a motor-generator performing functions of both the motor and the generator as needed.

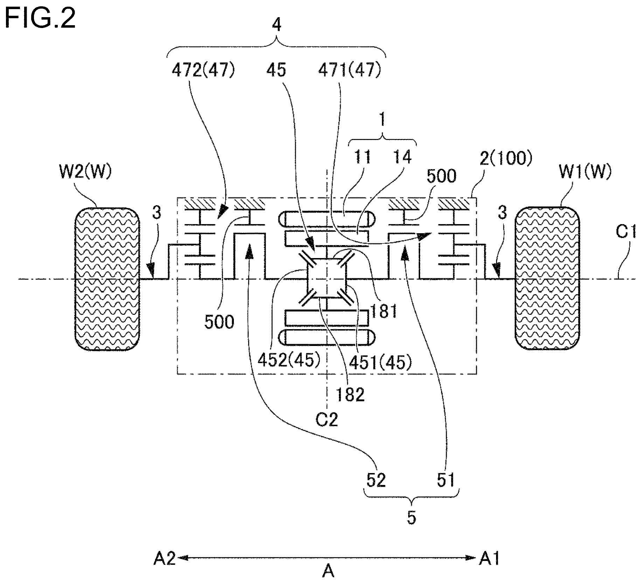

Fig. 1 is a schematic top view illustrating an equipment state of the vehicle drive device 100 in a vehicle VC. Fig. 2 is a skeleton diagram illustrating the vehicle drive device 100 according to this example. Fig. 1 and Fig. 2 schematically illustrate the external shape of a case 2.

The use of the vehicle drive device 100 is applicable to any vehicle including a rotating electric machine 1, such as an electric vehicle or a hybrid vehicle, and is applicable to any vehicle drive system such as front-wheel drive or rear-wheel drive.

The vehicle drive device 100 includes the rotating electric machine 1, the case 2, a pair of output members 3, a transmission mechanism 4, and a braking device 5, as schematically illustrated in Fig. 1 and Fig. 2.

The rotating electric machine 1 may be an alternating-current rotating electric machine driven by three-phase alternating current. For example, the rotating electric machine 1 is an inner-rotor type. In the rotating electric machine 1, a rotor 14 rotatable around a first shaft C1 is placed inside a stator 11 (see Fig. 2) in the radial direction.

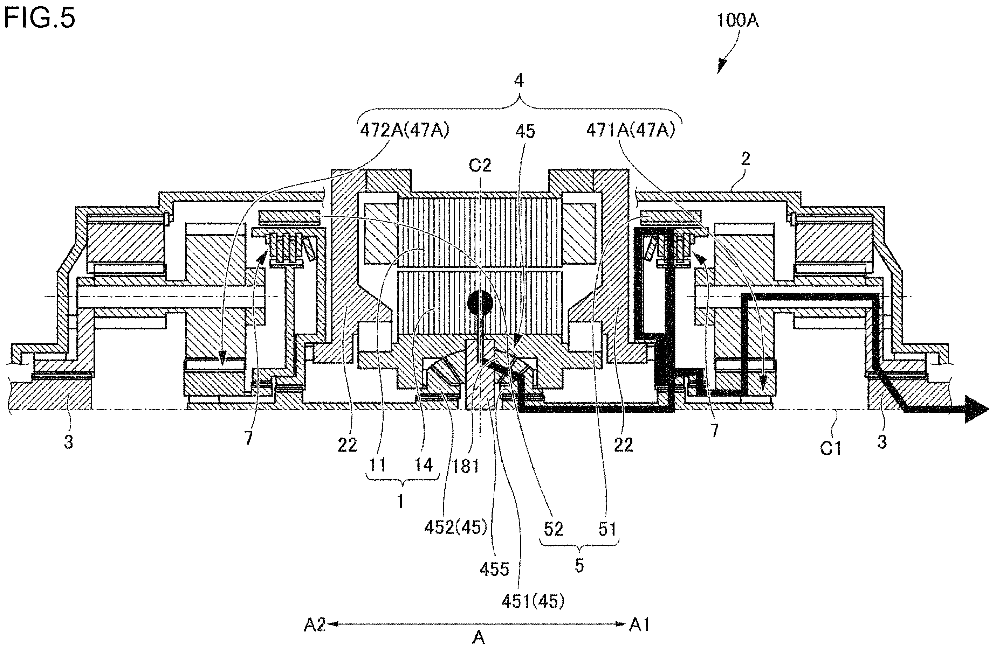

In this example, the rotating electric machine 1 is provided in such a way as to directly drive a differential gear mechanism 45 to be described later. Specifically, the rotor 14 is coupled to differential pinions 181 and 182 constituting the differential gear mechanism 45 through a differential pinion shaft 455 (see Fig. 5 to be described later) in such a manner as to rotate with the differential pinions 181 and 182 and the differential pinion shaft 455. In other words, the differential pinions 181 and 182 revolve around the first shaft C1 with the rotor 14 and, at the same time, rotates around a second shaft C2 passing through the center position of the differential gear mechanism 45 and being orthogonal to the first shaft C1 during differential rotation.

The case 2 accommodates the rotating electric machine 1, the transmission mechanism 4, and the braking device 5. The case 2 may be formed by combination (coupling) of a plurality of members. The case 2 may accommodate part of the output member 3. For example, the case 2 may accommodate only part of one of the pair of output members 3.

One of the pair of output members 3 is drive-coupled to a first wheel W1 being one of a pair of wheels W, and the other of the pair of output members 3 is drive-coupled to a second wheel W2 being the other of the pair of wheels W. Note that the output members 3 may include drive shafts, respectively, and, for example, may be coupled to the first wheel W1and the second wheel W2 through constant-velocity joints, respectively. Further, a part of the output member 3 supported by the case 2 may have the form of an intermediate shaft.

In this example, the pair of output members 3 are placed on the first shaft C1 together with the rotating electric machine 1, as illustrated in Fig. 2. In other words, the rotating electric machine 1 and the pair of output members 3 are placed coaxially.

The transmission mechanism 4 transmits driving force between the rotating electric machine 1 and the pair of output members 3.

The transmission mechanism 4 includes the differential gear mechanism 45 and a speed reduction mechanism 47.

The differential gear mechanism 45 distributes driving force transmitted from the rotating electric machine 1 side to the pair of output members 3. In the example illustrated in Fig. 2, the differential gear mechanism 45 distributes rotation of the differential pinions 181 and 182 to a first side gear 451 and a second side gear 452. The differential gear mechanism 45 may be placed coaxially with the pair of output members 3 (i.e., on the first shaft C1). In this example, the differential gear mechanism 45 is placed inside the rotor 14 in the radial direction.

The speed reduction mechanism 47 is provided between the differential gear mechanism 45 and a wheel W on the power transmission path. The speed reduction mechanism 47 is any reduction mechanism and may be a speed reduction mechanism using a planetary gear as illustrated in Fig. 2 or a speed reduction mechanism using a counter gear.

In this example, the speed reduction mechanisms 47 are respectively provided between the differential gear mechanism 45 and the first wheel W1 and between the differential gear mechanism 45 and the second wheel W2 on the power transmission path. In other words, a pair of speed reduction mechanisms 47 are provided in association with the pair of output members 3. When the left and right speed reduction mechanisms 47 are distinguished, the right side and the left side are hereinafter expressed as a speed reduction mechanism 471 and a speed reduction mechanism 472, respectively.

The braking devices 5 are provided between the rotating electric machine 1 and the pair of output members 3 on the power transmission path and generate braking force against rotation of the wheels W. In this example, the braking device 5 has a capability to generate braking force of magnitude allowing a suitable stop of the vehicle VC in a traveling state. Note that such magnitude of braking force varies with the vehicle weight, required power performance, and the like and may be adapted for each type of vehicle.

The braking device 5 may be controlled in such a way as to generate braking force according to an amount of operation of a brake pedal (unillustrated) by a driver. For example, the braking device 5 may constitute a brake-by-wire system. Further, braking force provided by the braking device 5 may be controlled in coordination with a regeneration brake provided by the rotating electric machine 1.

By including such a braking device 5, the need for separately including a common braking device (e.g., a wheel cylinder, a brake rotor, and a brake caliper) on the wheel W of the vehicle VC can be eliminated or reduced. For example, the wheel W may not be provided with a common braking device, and the unsprung weight can be greatly reduced in this case. Alternatively, the wheel W may be provided with a braking device having a capability less than that of a common braking device (e.g., a fail-safe drum brake), and the unsprung weight can be reduced also in this case.

The braking device 5 may take any form and may employ any actuation method. Examples of the braking device 5 may include an electro-hydraulic band brake and a disk brake. In any case, the braking device 5 is accommodated in the case 2, and a fixed element 500 is fixed to the case 2.

In this example, the braking devices 5 are respectively provided between the differential gear mechanism 45 and the first wheel W1 and between the differential gear mechanism 45 and the second wheel W2 on the power transmission path. In other words, a pair of braking devices 5 are provided in association with the pair of output members 3. When the left and right braking devices 5 are distinguished, the right side and the left side are hereinafter expressed as a braking device 51 and a braking device 52, respectively.

In this case, the braking device 5 is preferably placed between the differential gear mechanism 45 and the speed reduction mechanism 47 on the power transmission path. Specifically, the braking device 51 is preferably placed between the differential gear mechanism 45 and the speed reduction mechanism 471 on the power transmission path, and the braking device 52 is preferably placed between the differential gear mechanism 45 and the speed reduction mechanism 472 on the power transmission path. In this case, braking torque required for stopping rotation of the wheel W can be reduced compared with a case of the braking device 5 being placed between the speed reduction mechanism 47 and the wheel W on the power transmission path. Thus, the design value of braking force to be generated by the braking device 5 can be minimized, and the braking device 5 can be downsized.

Such a vehicle drive device 100 can cause the vehicle VC equipped with the vehicle drive device 100 to travel by transmitting output torque of the rotating electric machine 1 to the pair of wheels W through the pair of output members 3. Then, by actuating the braking device 5, the vehicle drive device 100 can reduce (adjust) power transmitted to the pair of output members 3 from the rotating electric machine 1 or brake the wheels W.

As described above, the braking devices 5 according to this example are respectively provided between the differential gear mechanism 45 and the left and right wheels W on the power transmission path and therefore can brake the left and right wheels W independently of each other. Accordingly, for example, functions related to an anti-lock brake system (ABS), vehicle posture stabilization control, and a pseudo-limited-slip differential (LSD) can also be provided by using the braking device 5. In other words, the braking device 5 can be equipped with diverse functions.

Further, as described above, the braking device 5 according to this example is supported not by the wheel W under the spring but by the case 2 above the spring. Accordingly, a common braking device under the spring can be eliminated or downsized, and the unsprung weight can be greatly reduced, according to this example.

Further, as described above, the braking device 5 according to this example is accommodated in the case 2 and is unitized with the rotating electric machine 1 and the transmission mechanism 4. Thus, efficient placement is enabled, and the number of parts in and the weight of the vehicle drive device 100 as a whole can be reduced.

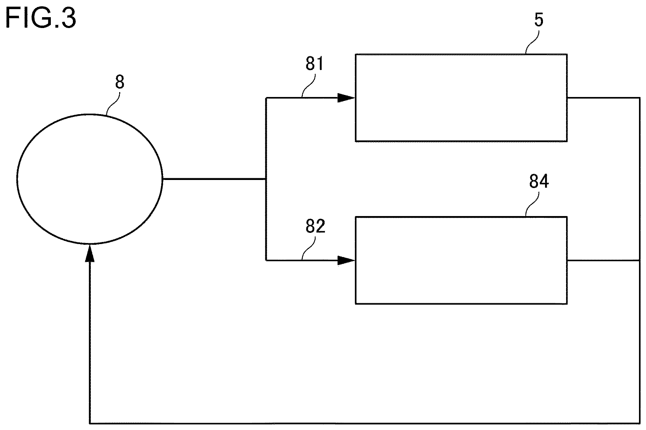

Fig. 3 is a schematic diagram illustrating an example of an oil supply system applicable to this example.

When the braking device 5 operates hydraulically, part of oil supplied to the braking device 5 may be utilized by another component in the vehicle drive device 100. Specifically, hydraulic circuits in the same system may be utilized by the braking device 5 and the other component in the vehicle drive device 100. In the example illustrated in Fig. 3, an electric oil pump 8 is connected to the braking device 5 through an oil passage 81 and is connected to a cooling-lubrication target unit 84 in the vehicle drive device 100 through an oil passage 82. The cooling-lubrication target unit 84 may include the rotating electric machine 1 and the transmission mechanism 4. Further, the cooling-lubrication target unit 84 may include a bearing (unillustrated) and the like provided in the case 2. Note that the oil passage 81 and the oil passage 82 may be connected through a valve or the like. Further, part or all of the oil passage 81and the oil passage 82 may be formed on the case 2 by machining or may be formed by a tubular member.

Such an oil supply system can supply oil to the braking device 5 and another component in the vehicle drive device 100 (e.g., the rotating electric machine 1) by utilizing the electric oil pump 8 common to both. In this case, the number of parts and the like can be reduced compared with a case of supplying oil to the braking device 5 and the other component in the vehicle drive device 100 (e.g., the rotating electric machine 1) by separate systems.

Note that, in a modified example, high-pressure oil may be supplied to the braking device 5 from a master cylinder (unillustrated), or high-pressure oil may be supplied from another hydraulic circuit. Further, the braking device 51 and the braking device 52 in the braking device 5 may be connected to the hydraulic circuit in such a manner as to be able to control oil pressure independently of each other. In this case, the braking device 5 may be equipped with the function of the ABS described above or the like.

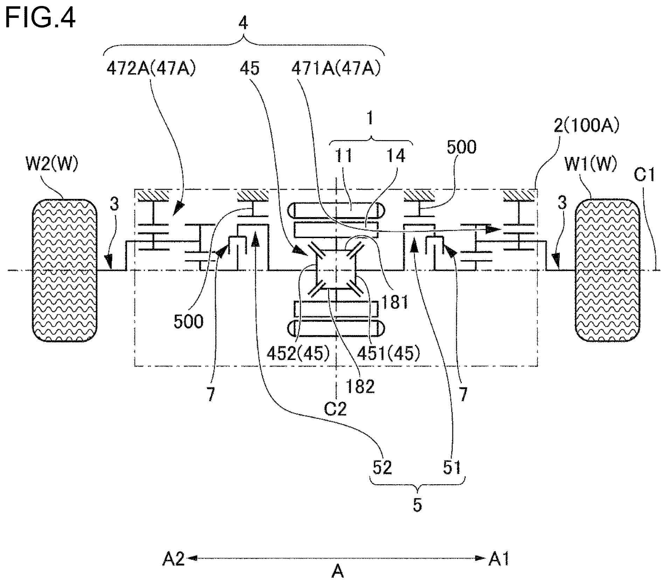

Next, another example is described with reference to Fig. 4 and a subsequent drawing.

Fig. 4 is a skeleton diagram illustrating a vehicle drive device 100A according to another example.

The vehicle drive device 100A according to the other example differs from the vehicle drive device 100 according to the example described above in that a torque limiter 7 is added. Note that the vehicle drive device 100A according to the other example also differs from the vehicle drive device 100 according to the example described above in that the speed reduction mechanisms 47 is replaced by speed reduction mechanisms 47A (speed reduction mechanisms 471A and 472A). The speed reduction mechanism 47A is a stepped-pinion planetary gear.

The torque limiter 7 has a function of preventing excessive torque acting on the braking device 5 and the like from the wheel W. The torque limiter 7 is placed between the braking device 5 and the speed reduction mechanism 47A on the power transmission path. The torque limiter 7 may be accommodated in the case 2.

This example also provides effects similar to those provided by the example described above.

Fig. 5 is a schematic cross-sectional view of the vehicle drive device 100A according to the other example. Fig. 5 illustrates only a configuration on one side with respect to the first shaft C1. While only the A1 side of the power transmission path is indicated by an arrow R5 in Fig. 5, the same applies to the A2 side.

In the example illustrated in Fig. 5, the braking device 5 and the torque limiter 7 are placed by utilizing a dead space being formed outside in a radial direction around the first shaft C1 and between the rotating electric machine 1 and the speed reduction mechanism 47A in the A-direction. For example, the braking device 5 and the torque limiter 7 may be placed outside the rotor 14 in the rotating electric machine 1 in the radial direction (may be placed in such a way as to overlap the stator 11 viewed in the direction of the first shaft C1). In this case, space efficiency can be enhanced by utilizing the dead space. Further, the braking device 5 and the torque limiter 7 can be placed outside in the radial direction, which is advantageous in terms of torque, and therefore, the braking device 5 and the torque limiter 7 can be downsized.

Note that, in the example illustrated in Fig. 5, the case of the differential gear mechanism 45 is formed in such a way as to also serve as the shaft of the rotor 14. Further, the case 2 may include a center support 22, and part or all of the oil passage 81 described above with reference to Fig. 3 may be formed on the center support 22.

Note that while the example illustrated in Fig. 5 relates to the vehicle drive device 100A, a similar configuration (placement) of the braking device 5 can be provided for the vehicle drive device 100 according to the example described above.

While the examples have been described in detail above, various modifications and changes can be made within the contents described in the claims without being limited to a specific example. Further, all or a plurality of components in the aforementioned examples may be combined.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A vehicle drive device (100) comprising:
a rotating electric machine (1);
a differential gear mechanism (45) being connected to left and right wheels (W) and transmitting driving force from the rotating electric machine (1) to the wheels (W);
a first braking device (51) being placed between the differential gear mechanism (45) and the left wheel (W) on a power transmission path and generating braking force against rotation of the left wheel (W);
a second braking device (52) being placed between the differential gear mechanism (45) and the right wheel (W) on a power transmission path and generating braking force against rotation of the right wheel (W); and
a case (2) supporting the rotating electric machine (1), the differential gear mechanism (45), the first braking device (51), and the second braking device (52).

2. The vehicle drive device (100) according to Claim 1, further comprising:
a first speed reduction mechanism (471) being placed between the differential gear mechanism (45) and the left wheel (W) on a power transmission path and being supported by the case (2); and
a second speed reduction mechanism (472) being placed between the differential gear mechanism (45) and the right wheel (W) on a power transmission path and being supported by the case (2), wherein
the first braking device (51) is placed between the differential gear mechanism (45) and the first speed reduction mechanism (471) on a power transmission path, and
the second braking device (52) is placed between the differential gear mechanism (45) and the second speed reduction mechanism (472) on a power transmission path.

3. The vehicle drive device (100) according to Claim 1 or 2, wherein
the first braking device (51) and the second braking device (52) are placed outside a rotor (14) of the rotating electric machine (1) in a radial direction around a rotation shaft (C1) of the wheel (W).

4. The vehicle drive device (100) according to any one of Claims 1 to 3, wherein
the braking device (51, 52) is hydraulic, and
the vehicle drive device (100) further comprises:
an electric oil pump (8);
a first oil passage (81) guiding oil pressure-fed from the electric oil pump (8) to the first braking device (51) and the second braking device (52); and
a second oil passage (82) guiding oil pressure-fed from the electric oil pump (8) to the rotating electric machine (1) or the differential gear mechanism (45) in the case (2).
